# EUROPEAN PATENT APPLICATION

(11) **EP 1 294 163 A2**
(43) Date of publication of application: **19.03.2003**
(21) Application number: 02256136.9
(22) Date of filing: 04.09.2002
(51) Int. Cl.: H04M 3/487, H04M 1/00

(54) **Information delivering system**

(30) Priority: 13.09.2001 JP 2001278095
(71) Applicant: Nokia Corporation, 02150 Espoo (FI)
(72) Inventor: Takeyasu, Masanari, Tsukuba, Ibaragi (JP)
(74) Representative: Higgin, Paul

(57) **Abstract**

The invention provides an information delivering system in which, when persons happen to see attractive information such as advertisements, etc., access information such as a phone number, a URL, an e-mail address, etc. for getting access to further information relative to the contents of this attractive information can be easily taken into a portable information terminal such as a portable telephone, a PDA, etc. Therefore, the information delivering system includes at least one information display medium for displaying predetermined information; at least one information delivering unit which includes at least one transmitting side storing device arranged in proximity to the information display medium or integrated with the information display medium, and storing access information associated with the predetermined information, and also includes a local wireless communication device for delivering the access information taken out of the storing device; and a portable information terminal which has a delivering request device for requesting the delivery of the access information to the information delivering unit, and also has a receiving side storing device for storing the delivered access information, and is arranged within a communicatable area of the communication device.

## Description

The present invention relates to an information delivering system for delivering information to a portable information terminal by local wireless communication, and more particularly, relates to an information delivering system having an object in which access information such as a phone number, a URL, etc. displayed in an advertisement, etc. is easily taken into the portable information terminal by using the wireless communication.

Advertisements with various objects such as the propaganda of articles, the guides of events, the guides of administrative organs, etc. are arranged in various places. In the advertisement, access information such as a phone number relative to its advertisement contents, the address (URL) of a home page, an e-mail address, etc. are recently described in many cases. Therefore, a person having an interest in the advertisement contents stores these access information, and makes a phone call to an advertised restaurant and makes a reservation, and gets access to the home page of an advertised movie so as to obtain more detailed information of this movie.

The access information such as these phone number, URL, etc. is normally constructed by an arrangement of about ten to thirty alphabetic characters. A method for manually making a note of these alphabetic characters by a pocketbook, etc. or manually inputting these alphabetic characters to a portable information terminal such as a portable telephone, a PDA, etc. was conventionally used generally to store these alphabetic characters. However, in the case of the manual input, it takes time and labor, and there is a fear of an error in the input. Accordingly, it cannot be necessarily said that the manual input is convenient.

Several trials have been made to dissolve the inconvenience of such a manual work. For example, JP-A-9-204389 and JP-A-2000-207325 disclose that a bar code burying the URL thereinto is read by a bar code reader and is transferred to a personal computer, etc. In these systems, when a user reads the bar code corresponding to the URL by the bar code reader, the URL corresponding to this bar code is transmitted to the computer, etc., and the computer, etc. automatically get access to the home page corresponding to this URL, and display the URL. Thus, it is not necessary for the user to separately manually input the URL.

JP-A-2001-197381 discloses a television device having a memory means for storing advertisement information, etc. and receiving and accumulating the advertisement information. In this device, transmitted advertisement and news, traffic information, etc. are automatically accumulated to the memory means, and a list of the accumulated information is displayed on the screen. The user can select the displayed list by a remote controller and can see a predetermined desirable advertisement, etc. In this device, since the user can the same advertisement many times, it is considered that it is possible to make a time for writing the phone number, the URL, etc.

As mentioned above, the access information such as a phone number, a URL, etc. is an arrangement of about ten to thirty alphabetic characters. It took much labor to manually make a note of these alphabetic characters in a pocketbook, etc. and manually input these alphabetic characters to a portable information terminal such as a portable telephone, a PDA, etc. In particular, when the URL was displayed during the television advertisement, it was difficult to complete the noting operation during a short time. Therefore, even when persons were interested in the advertisement, the number of persons further making a note of this access information was small.

In the method using the bar code and described in JP-A-9-204389 and JP-A-2000-207325, the bar coder reader must come in contact with a bar code printing medium. Accordingly, there is a disadvantage in that this method cannot be applied to an advertisement, etc. located in a separated place. Further, in the device disclosed in JP-A-2001-197381, a time for making a note of the television advertisement can be secured, but it finally similarly takes labor to manually make a note and input an e-mail address, etc. Further, in this device, various information is accumulated, but it is unclear whether a user positively selects and sees an article advertisement, etc. from such information or not. If no user sees the advertisement, the user has no opportunity for getting access to this advertisement owner so that it is disadvantage for the advertisement owner.

In consideration of the above points, an object of the present invention is to provide an information delivering system in which, when persons happen to see attractive information such as advertisements, etc., access information such as a phone number, a URL, an e-mail address, etc. for getting access to further information relative to the contents of this attractive information can be easily taken into a portable information terminal such as a portable telephone, a PDA, etc.

The information distributing system in the present invention is constructed as follows to dissolve the above problems and achieve the predetermined desirable object in the present invention. Namely, the information delivering system is constructed by at least one information display medium for displaying predetermined information; at least one information delivering unit which has at least one transmitting side storing means arranged in proximity to the information display medium or integrated with the information display medium, and storing access information associated with the predetermined information, and also has local wireless communication means for delivering the access information taken out of the storing means; and a portable information terminal which has delivering request means for requesting the delivery of the access information to the information delivering unit, and also has receiving side storing means for storing the delivered access information, and is arranged within a communicatable area of the communication means.

The above predetermined information contains information for providing the propaganda of articles and services, the reports and the propaganda of activities of enterprises and administration, the positions of many shops, sightseeing spots, etc. The above information display medium includes paper, a blackboard, a notice board, a display device, a television device, etc. The above access information is information for getting access to an information source (a sales person in charge, a shop, a home page, etc.) relative to the display contents of the information display medium. For example, the access information contains a URL, an e-mail address, a phone number, a FAX number or a combination thereof. Further, the access information preferably contains an access destination, the name of an advertised article, etc. The plural access information can be easily managed by this name, etc. in the portable information terminal. The above local wireless communication means contains a bluetooth, wireless LAN, IrDA, etc.

In the above information distributing system, the information delivering unit preferably has receiving means for receiving update data delivered by wire or wirelessly; and update means for updating the access information stored to the transmitting side storing means by the update data.

Further, the information delivering unit preferably has Internet connecting means.

In the above information distributing system, the delivering request means can have means for selecting only required access information from the access information, and requesting the delivery of the required access information. Further, the information delivering unit preferably has means for recording the number of times of the delivering request from the delivering request means.

Further, the portable information terminal of the present invention preferably has a function for further obtaining information by using the access information obtained by the information delivering unit. For example, when the access information is the URL, an access means to a web page shown by this URL and a display means for displaying information further obtained from this web page may be also arranged. Further, when the access information is a phone number, a function for making a phone call without manually inputting the phone number by using the obtained phone number may be also arranged.

The information associated with the above predetermined information is not limited to the above access information, but may be also set to associated information such as news, a weather forecast, delay information, a time table of a traffic organ, music for propaganda, a winning number of a public lottery, etc. simply associated with the above predetermined information. Further, the above portable information terminal may be also replaced with an information terminal such as a desk top personal computer, etc. having no portability.

For a better understanding of the present invention and to understand how the same may be brought into effect reference will now be made to the accompanying drawings in which:

Fig. 1 is a view showing a first embodiment mode of an information delivering system in the present invention.

Fig. 2 is a view showing an information delivering unit constituting one portion of the present invention.

Fig. 3 is a view showing a portable information terminal constituting one portion of the present invention.

Fig. 4 is a view showing a second embodiment mode of the information delivering system in the present invention.

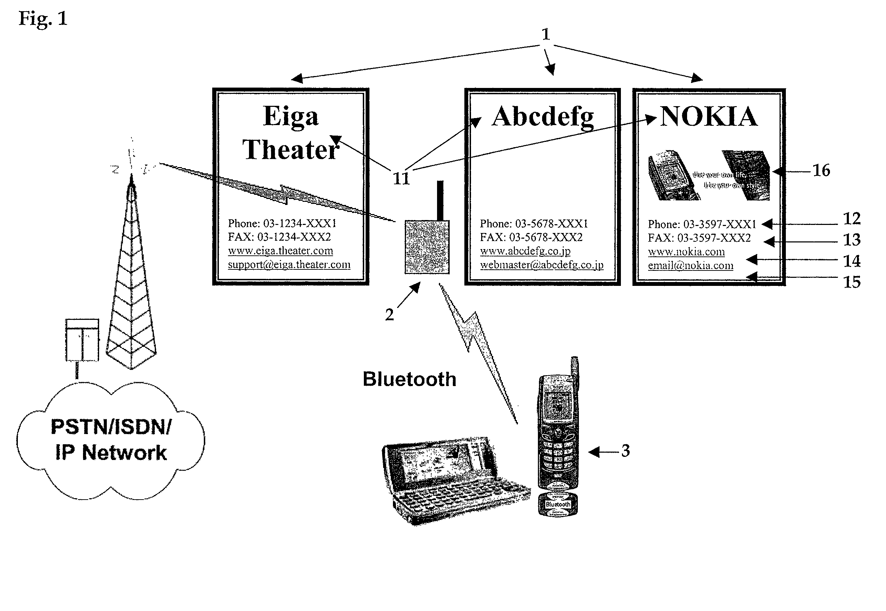

The embodiment modes of an information delivering system in the present invention will next be explained in detail with reference to Figs. 1 to 4.

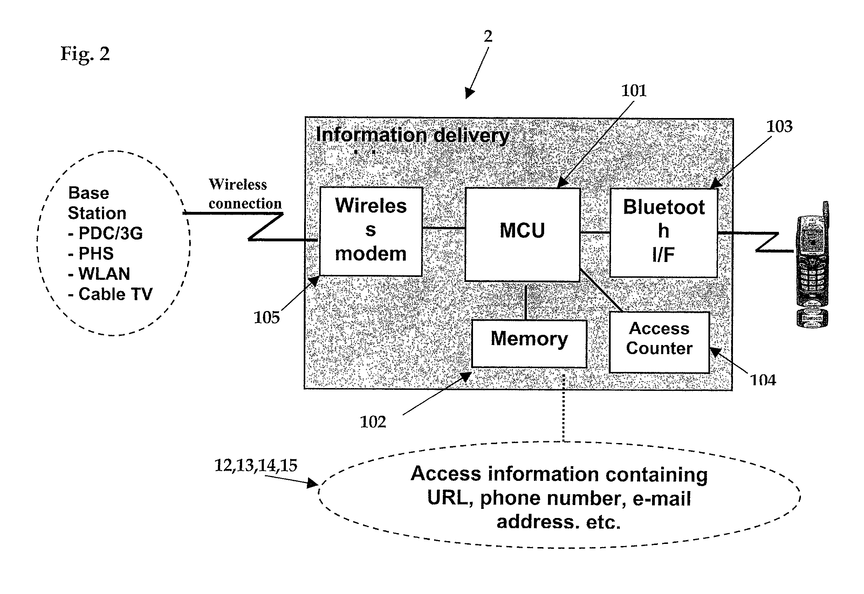

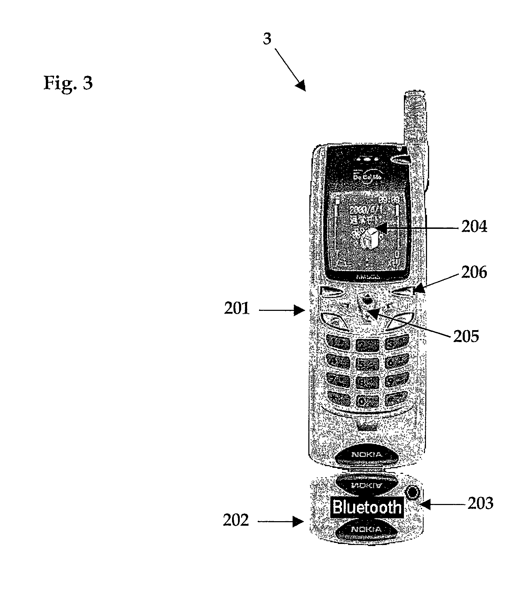

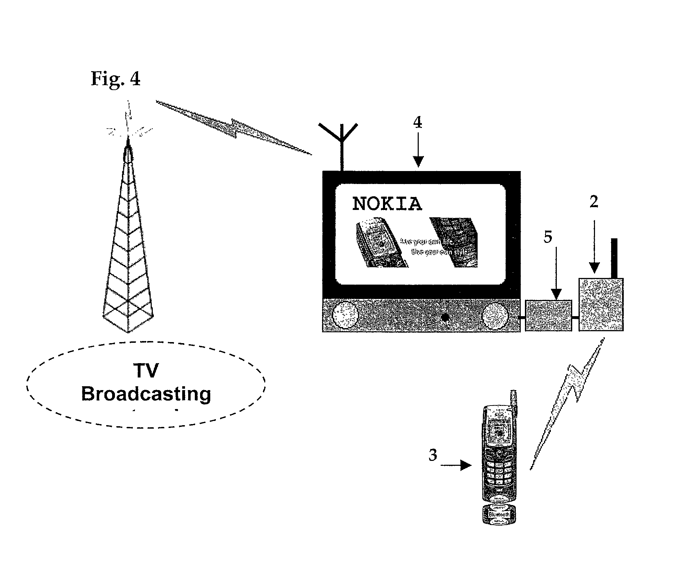

Fig. 1 is a system constructional view showing a first embodiment mode of the information delivering system in the present invention. Fig. 2 is a block constructional diagram of an information delivering unit constituting one portion of the present invention. Fig. 3 is a view showing the external appearance of a portable information terminal constituting one portion of the present invention. Fig. 4 is a system constructional view showing a second embodiment mode of the information delivering system in the present invention.

A first embodiment mode of the present invention will next be explained by using Figs. 1 to 3. Fig. 1 is a system constructional view entirely showing this embodiment mode. As shown in Fig. 1, an information display medium 1, an information delivering unit 2 and a portable information terminal 3 are set to constructional elements in the information delivering system in the present invention. The information display medium 1 is paper or a liquid crystal display, and the advertisements of articles, event guides, etc. are displayed. For example, the information display medium 1 is used as an advertisement within a train. Access information such as a phone number for getting access to more detailed information of this advertised article and an advertisement owner, etc. is stored to the information delivering unit 2. When a user sends a delivering request from the portable information terminal 3 to the information delivering unit 2 by using a local wireless communication means to obtain predetermined desirable access information, the information delivering unit 2 delivers the requested access information in response to this delivering request. The portable information terminal 3 receives this access information and stores this access information to a memory. The user can make a phone call to the advertisement owner and can peruse the home page of the advertisement owner by the stored access information.

The information display medium 1 in this embodiment is paper or the liquid crystal display device, and the advertisements of articles, event guides, etc. are displayed. For example, the information display medium 1 is utilized as an advertisement within a train, a shop guide plate of a restaurant street, etc. The name 11 of an enterprise as the advertisement owner, a photograph 16 of the advertised article, an article name, the other designs and propaganda words, etc. are displayed as predetermined information on the surface of the information display medium 1. Further, in addition to these, there is also a case in which access information 12 to 15 such as a phone number 12, the address of a home page (URL) 15, etc. relative to the advertised article and the advertisement owner is printed. In this embodiment, such plural information display media 1 exist in the same place, and respectively display different advertisements.

Fig. 2 is a block constructional view showing a constructional example of the information delivering unit 2 in the present invention. The information delivering unit 2 includes a micro controller unit (MCU) 101, a memory 102, a wireless communication interface 103, etc. The MCU 101 includes a CPU, a memory, control software, etc., and controls the operation of the information delivering unit 2. The memory 102 is used as a storing means for storing the above access information. Here, the access information is information for getting access to an information source relative to the displayed contents of the information display medium 1, and a phone number, a FAX number, an e-mail address and a URL are generally used.

In the information delivering unit 2 in this embodiment, a bluetooth is adopted as the local wireless communication means. It is possible to communicate with a device having another bluetooth existing at a near distance. When a delivering request is received through the above communication means from the portable information terminal 3 described later, the MCU 101 takes the access information according to this request out of the memory 102, and again delivers the access information through the communication means 103. The information delivering unit 2 has an access counter 104 for recording the number of receiving times of the delivering request so that this number can be recorded every access information. The advertisement owner can examine the recorded number, and can guess whether this advertisement is sufficient to attract people in interest.

The information delivering unit 2 also has an Internet connecting means. In this embodiment, a wireless modem device 105 connectable to a portable telephone network is adopted. However, if a network such as the Internet, etc. can be utilized within a train, a device connected to this network wirelessly or by wire may be also used. When the information display medium 1 displaying the advertisement is replaced with a medium displaying another advertisement and an access destination to article information, etc. is changed, the information delivering unit 2 receives data containing newest access information 12 to 15 through the Internet, and updates the access information stored to the memory 102 by using the received data.

Since the information delivering unit 2 in this embodiment adopts the bluetooth as a communication means, a communicatable area in standard is located at a distance within about several ten meters although this area depends on the output of a radio wave. Accordingly, the information display medium 1 and the information delivering unit 2 must be closely arranged to a certain extent so as to deliver the access information in association with the advertisement. In the application to the train advertisement, the information delivering unit 2 is arranged between the advertisements within the train, and is also arranged in the upper portion of a door, etc., or is integrated with the information display medium 1.

Fig. 3 shows one example showing the portable information terminal in the present invention. The portable information terminal 3 in this embodiment is a portable telephone 201 having a bluetooth communication device 202. The portable telephone 201 has a memory for storing data such as a phone number, etc., and preferably has a function for perusing the Internet. There is a dedicated button 203 for starting a bluetooth connection in the bluetooth communication device 202. When this dedicated button 203 is pushed, a list of adjacent bluetooth devices is displayed in a display 204. The information delivering unit is selected from the list by using an up-down key 205, etc. When a suitable button 206 is pushed, a first delivering request signal is sent to the information delivering unit 2. At this time, when there are plural information delivering units in the neighborhood, it is necessary to select one suitable information delivering unit. The information delivering unit delivers the list of the above stored access information in response to the first delivering request. The portable information terminal 3 receives this list through the communication device 202, and displays this access information list in the display 204. The names of advertised articles and company names are shown in the list. A user designates an article name and a company name as an object from the list by using the up-down key 205, etc. When the suitable button 206 is pushed, a second delivering request signal is sent to the information delivering unit 2. The information delivering unit 2 delivers the access information relative to the designated article, etc. in response to this second delivering request signal, and this information is stored to a memory of the portable information terminal 3.

Thus, the access information to predetermined desirable article and company, etc. can be obtained in the portable information terminal 3 without separately making a note and manually inputting the access information by the user. Further, if the portable information terminal 3 has a telephone function and a function for perusing the Internet, the user can directly make a phone call to this company and can get access to the home page.

A second embodiment of the present invention will next be explained with reference to Fig. 4. In this embodiment, the information display medium is set to a television device 4, and the information delivering unit 2 is arranged in proximity to this television device 4 or is integrated with the television device 4. The information delivering unit 2 stores access information such as a phone number, etc. for getting access to a company, etc. of the delivery source of a commercial inserted during a television program, and delivers this information in response to a delivering request of the portable information terminal 3 by using the local wireless communication means such as a bluetooth, etc. The information stored to the information delivering unit 2 is buried into a television broadcast wave and is updated every program. An updating interval can be arbitrarily set every one day, etc. For example, the teletext of a closed caption system, etc. developed by the United States screen image title society can be used as a method for burying the information into the broadcast wave. In a digital television broadcast in the future, various information will be able to be easily buried. In Fig. 4, reference numeral 5 designates a decoder for taking-out the buried access information by the teletext from the broadcast wave.

A time for displaying a phone number, a URL, etc. for getting access to a commercial source within one commercial is normally very short. However, it is not necessary for a user to make a note in a hurry by the information delivering system of the present invention, and the phone number of a predetermined desirable commercial, etc. are taken into the portable information terminal without haste. The delivered information can be also taken-in by the information terminal such as a desk top personal computer, etc. if the information terminal has a wireless communication means such as a bluetooth, etc.

The delivering format of the access information is desirably set to a standard format. There is a vCard propelled by Internet Mail Consortium (IMC) as one example of such a format. In the vCard, the describing format of a name, a phone number, an e-mail address, etc. is prescribed, and data of this format can be taken-in by various software. In portable telephone devices, many devices such as NM502i manufactured by NOKIA Japan Co., Ltd. cope with such a format. If the above access information is delivered in the vCard format, the access information can be taken into telephone directory software of many portable telephones, a PDA, a note type computer, etc. at present as it is.

Further, arbitrary data can be also treated as well as names and phone numbers in the standard of SyncML supported and prepared by 555 enterprises or more such as NOKIA, ERICSSON, IBM, etc. If this standard is adopted, various information can be delivered without being limited to the access information. For example, when the advertisement of a public lottery is displayed in the information display medium 1, the delivery of winning numbers of the newest public lottery can be received as information associated with this advertisement. Further, when a weather mark is displayed in the information display medium 1, the delivery of weather forecasts for several days can be also received as the associated information.

Thus, in accordance with the present invention, it is possible to provide an information delivering system in which, when people happen to see information such as an advertisement, etc. attracting people in interest, access information such as a phone number, a URL, an e-mail address, etc. for getting access to further information relative to the contents of this information can be easily taken into the portable information terminal such as a portable telephone, a PDA, etc.

## Claims

1. An information delivering system including:
at least one information display medium for displaying predetermined information;
at least one information delivering unit which includes at least one transmitting side storing means arranged in proximity to said information display medium or integrated with said information display medium, and storing access information associated with said predetermined information, and also includes local wireless communication means for delivering said access information taken out of said storing means; and
a portable information terminal which has delivering request means for requesting the delivery of said access information to said information delivering unit, and also has receiving side storing means for storing said delivered access information, and is arranged within a communicatable area of said communication means.

2. An information delivering system according to claim 1, wherein
said information delivering unit has:
receiving means for receiving update data delivered by wire or wirelessly; and
update means for updating said access information stored to said transmitting side storing means by said update data.

3. An information delivering system according to claim 2, wherein
said information delivering unit includes Internet connecting means.

4. An information delivering system according to any one of claims 1 to 3, wherein
said information display medium is constructed by a television device.

5. An information delivering system according to any one of claims 1 to 4, wherein
said delivering request means selects only required access information from said access information, and requests the delivery of the required access information.

6. An information delivering system according to any one of claims 1 to 5, wherein
said information delivering unit has means for recording the number of times of the delivering request from said delivering request means.

7. An information delivering system according to any one of claims 1 to 6, wherein
said local wireless communication means is a bluetooth.

8. An information delivering system according to any one of claims 1 to 7, wherein
said predetermined information is relative to the propaganda of articles.

9. An information delivering system according to any one of claims 1 to 9, wherein
said access information is a name, a URL, an e-mail address, a phone number, a FAX number or a combination thereof at an access destination.

10. An information delivering system comprises:
at least one information display medium for displaying predetermined information;
at least one information delivering unit which is constructed by at least one transmitting side storing means arranged in proximity to said information display medium or integrated with said information display medium, and storing associated information associated with said predetermined information, and is also constructed by local wireless communication means for delivering said associated information taken out of said storing means; and
an information terminal which has delivering request means for requesting the delivery of said associated information to said information delivering unit, and also has receiving side storing means for storing said delivered associated information, and is arranged within a communicatable area of said communication means.

11. An information delivering system according to claim 10, wherein
said local wireless communication means is a bluetooth.
